# EUROPÄISCHE PATENTANMELDUNG

(11) **EP 1 982 580 A2**
(43) Veröffentlichungstag der Anmeldung: **22.10.2008**
(21) Anmeldenummer: 08003494.5
(22) Anmeldetag: 26.02.2008
(51) Int. Cl.: A01G 23/06

(54) **Landwirtschaftliches Anbaugerät**

(30) Priorität: 18.04.2007 DE 102007018319
(71) Anmelder: Alois Pöttinger Maschinenfabrik Ges. m.b.H., 4710 Grieskirchen (AT)
(72) Erfinder: Schremmer, Wolfgang, 4062 Thening (AT); Kreupl, Walter, 4676 Aistersheim (AT); Ratzberger, Daniel, 4441 Behamberg (AT)
(74) Vertreter: Thoma, Michael

(57) **Zusammenfassung**

Die vorliegende Erfindung betrifft ein landwirtschaftliches Anbaugerät, wie Mähmaschine, Heuwerbungsmaschine, Bodenbearbeitungsgerät und dergleichen, mit einer Schnellkupplung zum mechanischen Ankuppeln des Anbaugeräts an einen Schlepper, sowie mindestens einem Gelenkwellenhalter, der eine Gelenkwelle des Anbaugeräts mit deren Anschlussstück relativ zum Maschinenrahmen des Anbaugeräts in einer vorbestimmten Kuppelposition hält, in der beim Kuppeln des Anbaugeräts mit dem Schlepper das Gelenkwellenanschlussstück mit einem schlepperseitigen Zapfwellenstück in Eingriff bringbar ist. Erfindungsgemäß zeichnet sich das Anbaugerät dadurch aus, dass der mindestens eine Gelenkwellenhalter mindestens ein Schwenkgelenk aufweist, dem eine Hemmvorrichtung zugeordnet ist, die ungewollte Auslenkungen des Gelenkwellenhalters aus der genannten Kuppelposition bis zu einer vorbestimmten äußeren Grenzlast auf die Gelenkwelle größer deren Eigengewicht unterbindet und Auslenkungen des Gelenkwellenhalters aus der genannten Kuppelposition bei Überschreiten der genannten Grenzlast freigibt.

## Beschreibung

Die vorliegende Erfindung betrifft ein landwirtschaftliches Anbaugerät, wie Mähmaschine, Heuwerber und dergleichen, mit einer Schnellkupplung zum mechanischen Ankuppeln an einen Schlepper, durch die ein Maschinenrahmen des Anbaugeräts formschlüssig am Schlepper ankuppelbar ist, sowie mit einem Gelenkwellenhalter, der eine Gelenkwelle des Anbaugeräts mit deren Anschlussstück relativ zum Maschinenrahmen des Anbaugeräts in einer vorbestimmten Kuppelposition hält, in der beim Kuppeln des Anbaugeräts mit dem genannten Schlepper das Gelenkwellenanschlussstück mit einem schlepperseitigen Zapfwellenstück in Eingriff bringbar ist.

In jüngerer Zeit wird versucht, das Ankuppeln von Landmaschinen an einen Schlepper zu vereinfachen und zu automatisieren, wobei bisweilen anstelle der direkten Verbindung der mehreren Kupplungspunkte einer Dreipunktanlenkung mit einem Schnellkuppelrahmen gearbeitet wird, der an dem Anbaugerät befestigt ist und mit einem dazu komplementären Gegenrahmen, der an der Dreipunktanlenkung des Schleppers angebaut ist, formschlüssig verriegelbar ist. Im wesentlichen ist hierzu lediglich der Gegenrahmen am Schlepper durch geschicktes Rangieren bzw. Betätigen der Hubvorrichtung des Schleppers in den bzw. auf den Schnellkuppelrahmen des Anbaugeräts zu fahren, so dass durch eine Hubbewegung oder auch durch fremdkraftbetätigtes Einfahren von Verriegelungselementen das Anbaugerät an den Schlepper angekuppelt werden kann. Trotz solcher Schnellkuppelrahmen ist jedoch nichtsdestotrotz das Ankuppeln des Antriebsstrangs bislang nur ungenügend automatisiert. Der Antriebsstrang weist üblicherweise an dem Anbaugerät eine Gelenkwelle auf, die teleskopierbar und mehrachsig verschwenkbar ist, um bei entsprechenden Relativbewegungen zwischen Anbaugerät und Schlepper, wie beispielsweise beim Ausheben des Anbaugeräts, dennoch eine Drehmomentübertragung von der Zapfwelle des Schleppers her zu ermöglichen. Im abgebauten Zustand des Anbaugeräts hängt die Gelenkwelle jedoch nach unten bzw. liegt sie in einem Gelenkwellenhalter, wobei in letzterem Fall jedoch üblicherweise das gelenkige Anschlussstück der Gelenkwelle nach unten kippt, so dass ein automatisches Ankuppeln des Gelenkwellenanschlussstücks an die schlepperseitige Zapfwelle nicht ohne weiteres möglich ist.

In der DE 42 13 069 C1 wird ein landwirtschaftliches Anbaugerät der genannten Art beschrieben, das einen Schnellkuppelrahmen aufweist, der mit einem dazu komplementären Gegenrahmen am Schlepper formschlüssig verriegelbar ist. Um auch die Gelenkwelle zwischen Anbaugerät und Schlepper einfach kuppeln zu können, ist vorgesehen, die Gelenkwelle nicht an dem Anbaugerät, sondern am Schlepper zu belassen und schlepperseitig durch einen am Gegenrahmen befestigten Gelenkwellenhalter in einer vorbestimmten Ausrichtung zu halten, so dass die von dem Gelenkwellenhalter schlepperseitig festgestellte Gelenkwelle auf ein starres Getriebewelleneingangsstück am Anbaugerät aufgefahren werden kann. Nachteilig ist hieran jedoch, dass die Schnellkupplung nebst Gelenkwellenhalter nicht ohne weiteres an an sich herkömmlichen Anbaugeräten nachrüstbar ist, die üblicherweise eine Gelenkwelle aufweisen, die an das schlepperseitige Zapfwellenstück angekuppelt werden soll. Der Antriebsstrang benötigt eine zusätzliche Trennstelle am Eingangsgetriebe des Anbaugeräts. Zum anderen ist der am Schlepper vorgesehene Teil der Schnellkupplung, insbesondere dessen Gelenkwellenhalter mit der daran befestigten Gelenkwelle, nicht ohne weiteres mit verschiedenen Anbaugeräten kompatibel. Das vom Schlepper abstehende Gelenkwellenstück wird durch den Gelenkwellenhalter in eine für ein bestimmtes Anbaugerät passende Kuppelstellung fixiert, so dass bei einem anderen Anbaugerät eines anderen Typs, bei dem das Eingangsgetriebe an anderer Stelle sitzt, die Kuppelposition der Gelenkwelle trotz vielleicht passenden Schnellkuppelrahmens nicht passend ist. Mit anderen Worten muss dann, wenn der Schlepper zuerst eine Mähmaschine ankuppelt und nachfolgend einen Zetter verwendet, der Gelenkwellenhalter unter Umständen erst umständlich umgebaut werden, um das Ankuppeln des Zetters mit dem dort vielleicht an anderer Stelle sitzenden Eingangsgetriebe zu ermöglichen. Schließlich ist bei dem vorbekannten Gelenkwellenhalter gemäß DE 42 13 069 C1 problematisch, dass Ausgleichsbewegungen der Gelenkwelle, wie sie beispielsweise bei verstellbaren Anbaugeräten im Betrieb notwendig werden können, nicht ohne weiteres möglich sind, da der Gelenkwellenhalter das Anschlussstück der Gelenkwelle in einer fest vorgegebenen Position hält.

Hiervon ausgehend liegt der vorliegenden Erfindung die Aufgabe zugrunde, ein verbessertes landwirtschaftliches Anbaugerät der genannten Art zu schaffen, das Nachteile des Standes der Technik vermeidet und letzteren in vorteilhafter Weise weiterbildet. Insbesondere soll ein verbesserter Gelenkwellenhalter geschaffen werden, der ein automatisches Kuppeln des Antriebsstrangs mit einer Gelenkwelle ermöglicht, im Betrieb Ausgleichsbewegungen zulässt und es dem Schlepperführer ermöglicht, auch nach einem zwischenzeitlichen Arbeiten mit einem anderen Anbaugerät das zwischenzeitlich abgestellte Anbaugerät wieder in einfacher Weise automatisch anzukuppeln.

Erfindungsgemäß wird die genannte Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, die in verschiedene Winkelstellungen schwenkbare und ggf. teleskopierbare Gelenkwelle am Anbaugerät zu belassen und deren Anschlussstück durch einen Gelenkwellenhalter in einer vorbestimmten Kuppelposition relativ zum Schnellkuppelrahmen des Anbaugeräts zu halten, so dass das genannte Gelenkwellenanschlussstück beim Ankuppeln des Anbaugeräts am Schlepper automatisch mit dem schlepperseitigen Zapfwellenstück gekuppelt werden kann. Der Gelenkwellenhalter umfasst hierbei erfindungsgemäß mindestens ein Schwenkgelenk, dem eine Hemmvorrichtung zugeordnet ist, die ungewollte Auslenkungen des Gelenkwellenhalters aus der genannten Kuppelposition bis zu einer vorbestimmten äußeren Grenzlast auf die Gelenkwelle, die größer als das Eigengewicht der Gelenkwelle ist, unterbindet und solche Auslenkungen des Gelenkwellenhalters bei Überschreiten der genannten Grenzlast jedoch freigibt. Der Gelenkwellenhalter ist also derart ausgebildet, dass er einerseits bei größeren Lasten auf die Gelenkwelle nachgiebig bzw. bewegbar ist, während der Gelenkwellenhalter andererseits die beim Abkuppeln eingenommene Stellung des Gelenkwellenanschlussstücks sozusagen einfriert, solange auf die Gelenkwelle und dessen Anschlussstück nur deren Eigengewicht bzw. kleinere Lasten einwirken. Hierdurch wird die Gelenkwelle in der jeweils abgekuppelten Stellung gehalten, so dass beim erneuten Wiederankuppeln das Gelenkwellenanschlussstück des Anbaugeräts in der exakt passenden Stellung steht. Andererseits werden unter größeren Kräften, wie sie beispielsweise im Betrieb auftreten können, Ausgleichsbewegungen der Gelenkwelle zugelassen, wobei sich der Gelenkwellenhalter sozusagen selbsttätig mitverstellt. Zum anderen wird es auch problemlos ermöglicht, das Gelenkwellenanschlussstück in der abgekuppelten Gerätestellung beispielsweise von Hand in eine veränderte Kuppelposition zu bringen, beispielsweise um einen anderen Schleppertyp mit einer anderen Zapfwellenposition ankuppeln zu können.

Die Hemmvorrichtung, die die jeweilige Stellung des Gelenkwellenhalters bis zu einer vorbestimmten Belastung hin einfriert, kann grundsätzlich verschieden ausgebildet sein. In vorteilhafter Weiterbildung der Erfindung kann die Hemmvorrichtung ein in das zumindest eine Schwenkgelenk des Gelenkwellenhalters integriertes Hemmelement aufweisen, welches eine Bewegung des Gelenkwellenhalters bezüglich des jeweiligen Schwenkgelenks hemmt. Durch die integrierte Anordnung des Hemmelements unmittelbar an dem jeweiligen Schwenkgelenk, insbesondere unmittelbar an dessen Schwenkachse, kann eine kleinbauende, kompakte Ausbildung des Gelenkwellenhalters ohne zusätzliche Querverstrebungen und dergleichen erreicht werden.

Vorteilhafterweise kann die Hemmvorrichtung dabei eine das Schwenkgelenk feststellende Reibbremse aufweisen, die eine vorbestimmte Rutschgrenze besitzt, so dass sie bis zum Erreichen der vorgenannten Grenzlast eine Feststellbremse und bei Überschreiten dieser Grenzlast eine Rutschbremse bildet.

Insbesondere kann die Hemmvorrichtung aufeinander vorgespannte Reibelemente umfassen, die in das jeweilige Schwenkgelenk integriert sein können. Beispielsweise können die jeweilige Schwenkachse zumindest bereichsweise umschließende Reibscheiben vorgesehen sein, die bezüglich der Schwenkachse einen Hebelarm besitzen und hierdurch eine Schwenkbewegung des Schwenkgelenks durch Reibkräfte hemmen können.

Vorteilhafterweise ist die Hemmkraft bzw. die Rutschgrenze der Hemmvorrichtung einstellbar. Die Hemmvorrichtung kann entsprechende Einstellmittel zur variablen Einstellung der vorgegebenen Grenzlast aufweisen. Sind in der vorgenannten Weise Reibelemente vorgesehen, können die Einstellmittel einstellbare Vorspannmittel zur variablen Einstellung der Vorspannung bzw. des Anpressdrucks der Reibelemente aufweisen. Nach einer vorteilhaften Ausführung der Erfindung kann ein tellerfederartiges Reibelementepaket vorgesehen sein, das beispielsweise durch eine Einstellschraube axial vorspannbar ist, um die gewünschte Hemmkraft einstellen zu können.

Die Hemmvorrichtung kann jedoch auch von solchen Reibelementen abweichend ausgebildet sein. Nach einer alternativen vorteilhaften Ausführung der Erfindung kann die Hemmvorrichtung eine Drehmomentstütze beispielsweise in Form eines Druckmittelaktors aufweisen, der das jeweilige Schwenkgelenk des Gelenkwellenhalters und/oder ein damit verbundenes Gelenkwellenhalterteil in der vorbestimmten Kuppelposition hält. Ein solcher Druckmittelaktor kann in Weiterbildung der Erfindung vorteilhafterweise auch dazu genutzt werden, durch Druckmittelbeaufschlagung die Position des Gelenkwellenhalters aktiv zu verändern. Alternativ kann der Druckmittelaktor jedoch ggf. auch nur passiv wirkend ausgebildet sein, insbesondere dahingehend, dass er den Gelenkwellenhalter nach Art einer Feststellbremse in der gewünschten Kuppelposition hält. Um in der vorgenannten Weise eine Verstellung des Gelenkwellenhalters bei Überschreiten einer vorbestimmten Grenzlast auf die Gelenkwelle zuzulassen, kann dem Druckmittelaktor ein Druckbegrenzungsventil zugeordnet sein, welches ein Ausströmen des Druckmittels bei Erreichen eines vorbestimmten Drucks ermöglicht, wobei vorzugsweise der Druckmittelaktor in Schwimmstellung geschaltet sein kann und das Druckbegrenzungsventil das Umpumpen des Druckmittels von der einen Aktorkammer in eine entgegengesetzte Aktorkammer nur bei Erreichen eines vorbestimmten Drucks zulässt.

Der Gelenkwellenhalter ist in Weiterbildung der Erfindung vorzugsweise mehrgelenkig ausgebildet. Insbesondere kann er durch einen mehrgelenkigen Gelenkarm gebildet sein, der einenends an dem Schnellkuppelrahmen des Anbaugeräts und anderenends an dem Anschlussstück der Gelenkwelle des Anbaugeräts befestigt ist. Die Gelenke des Gelenkarms sind dabei vorzugsweise jeweils mit einer Hemmvorrichtung der vorgenannten Art beschaltet, wobei vorzugsweise jeder Gelenkpunkt eine solche Hemmvorrichtung aufweist.

Das Gelenkwellenanschlussstück der Gelenkwelle ist an dem Gelenkwellenhalter um ihre Drehachse drehbar gelagert. Hierzu umfasst der Gelenkwellenhalter in Weiterbildung der Erfindung als Haltemittel ein Haltestück, in dem das besagte Gelenkwellenanschlussstück des Anbaugeräts um dessen Drehachse drehbar, im Übrigen jedoch fest, insbesondere axial fest und fest gegen Kippen, gelagert ist.

Der vorgenannte Gelenkarm des Gelenkwellenhalters kann nach einer vorteilhaften Ausführung der Erfindung längenveränderbar, insbesondere teleskopierbar, ausgebildet sein, wobei in Weiterbildung der Erfindung Blockiermittel zum Blockieren der Längenveränderbarkeit vorgesehen sein können. Die Blockiermittel können dabei in der vorgenannten Weise eine Hemmvorrichtung zur Hemmung der Längenveränderbarkeit bis zum Erreichen einer vorbestimmten Grenzlast aufweisen, die bei Überschreiten dieser Grenzlast die Längenveränderbarkeit jedoch freigibt.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht eines landwirtschaftlichen Anbaugeräts in Form eines Frontmähwerks, das an einen Schlepper angebaut ist,
- Fig. 2:: eine schematische, perspektivische Ansicht des Anbaugeräts aus Fig. 1 im Bereich der daran vorgesehenen Schnellkupplung umfassend einen Schnellkuppelrahmen sowie einen Gelenkwellenhalter in Form eines mehrgelenkigen Gelenkarms, der die Antriebs-Gelenkwelle des Anbaugeräts in einer vorbestimmten Kuppelposition hält,
- Fig. 3:: einen Halbschnitt durch die einem Gelenk des Gelenkwellenhalters zugeordnete Hemmvorrichtung nach einer vorteilhaften Ausführung der Erfindung, und
- Fig. 4:: eine schematische, perspektivische Ansicht des Anbaugeräts aus Fig. 1 gemäß einer alternativen Ausführungsform in einer Ansicht ähnlich Fig. 2, wobei der Maschinenrahmen des Anbaugeräts ohne Zwischenschaltung eines Schnellkuppelrahmens über eine Dreipunktanlenkung an den Schlepper anbaubar ist.

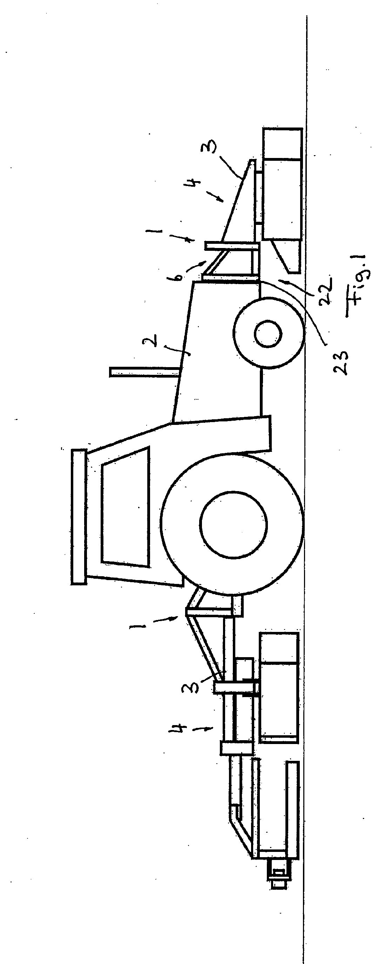

Bei der in Figur 1 gezeigten Schlepper-Anbaugeräte-Kombination ist als Anbaugerät 4 eine Mähmaschine gezeichnet, die mit einem Frontmähwerk an den Schlepper 2 frontangebaut und mit einem Heckmähwerk an den Schlepper 2 heckangebaut ist, die in an sich bekannter Weise jeweils um aufrechte Achsen rotierende Trommeln mit am Umfang angeordneten Schneidmessern zum Schneiden aufrechten Ernteguts umfassen können. Es versteht sich jedoch, dass als Anbaugerät auch andere Grünland- und/oder Bodenbearbeitungsgeräte, wie beispielsweise Zetter, Schwader und dergleichen, mit einem eine Gelenkwelle umfassenden Antriebsstrang Verwendung finden können und anders als in Figur 1 gezeichnet auch nur heckangebaut oder nur frontangebaut ausgeführt sein können.

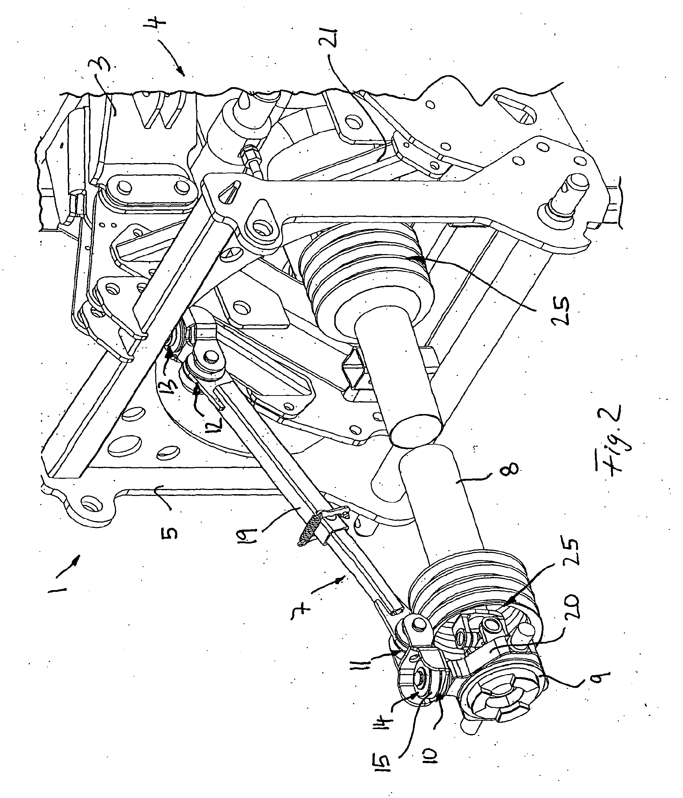

Wie Figur 2 zeigt, umfasst das Anbaugerät vorteilhafterweise an ihrem dem Schlepper 2 zugewandten Ende eine Schnellkupplung 1, die in der gezeichneten Ausführungsform nach Fig. 2 einen im wesentlichen rechteckigen Schnellkupplungsrahmen 5 umfasst, der sich - grob gesprochen - in einer aufrechten Ebene quer zur Fahrtrichtung des Anbaugeräts 4 erstreckt. Der Schnellkuppelrahmen 5 ist dabei vorteilhafterweise an dem Anbaugerät 4 nachrüstbar. Hierzu ist der Schnellkuppelrahmen 5 an einem Maschinenrahmen 3 des Anbaugeräts 4 bzw. einem damit verbundenen Anbaubock 21, mit Hilfe dessen das Anbaugerät 4 in an sich herkömmlicher Weise an eine Dreipunktanlenkung des Schleppers 2 angebaut werden könnte, befestigt. Der Anbaubock 21 umfasst drei Anbaupunkte, an denen der Schnellkuppelrahmen 5 starr und lösbar befestigt ist.

Der am Anbaugerät 4 befestigte Schnellkuppelrahmen 5 ist mit einem am Schlepper 2 befestigten Gegenrahmen 6 formschlüssig in Eingriff bringbar und verriegelbar, wobei an dem Schnellkuppelrahmen 5 und dem Gegenrahmen 6 entsprechende Eingriffsstücke und/oder Verriegelungsstücke vorgesehen sind, die vom Schlepper 2 aus betätigbar sind, um ein automatisches Ankuppeln ohne Absteigen vom Schlepper 2 zu ermöglichen.

Der Gegenrahmen 6 ist mit dem Schlepper 2 durch eine an letzterem vorgesehene Dreipunktanlenkung 22 verbunden, vgl. Figur 1.

Wie Figur 2 zeigt, umfasst das Anbaugerät 4 eine durch den Schnellkuppelrahmen 5 hindurch tretende und/oder stirnseitig zum Schlepper 2 hin über die anbaugeräteseitigen Anlenkpunkte vorspringende Gelenkwelle 8, die dazu vorgesehen ist, vom Schlepper 2 her durch dessen Zapfwelle 23 angetrieben zu werden. In an sich bekannter Weise kann die Gelenkwelle 8 beispielsweise über ein Eingangsgetriebe an dem Anbaugerät 4 vorgesehene Arbeitswerkzeuge antreiben, die bei der gezeichneten Ausführung nach Figur 1 die rotatorisch antreibbaren Schneidtrommeln sein können.

Die Gelenkwelle 8 des Anbaugeräts 4 umfasst in an sich bekannter Weise an beiden Enden ein jeweils mehrachsiges Gelenk 24 und 25, das beispielsweise wie in der gezeichneten Ausführung zu sehen ist, als Kardangelenk ausgebildet sein kann, so dass die Gelenkwelle 8 einerseits insgesamt gegenüber dem Anbaugerät 4 in dem Gelenk 24 mehrachsig verschwenkbar ist und andererseits das zum Ankuppeln an die Zapfwelle 23 des Schleppers 2 vorgesehene Anschlussstück 9 der Gelenkwelle 8 nochmals eigens mehrachsig gegenüber dem Rest der Gelenkwelle 8 verschwenkt werden kann.

Das genannte Anschlussstück 9 ist vorteilhafterweise ein formschlüssig wirkendes Kupplungsstück, das mit der Zapfwelle 23 des Schleppers 2 drehfest verriegelbar ist und durch eine Axialsicherung axial auf der Zapfwelle 23 sicherbar ist.

Um beim Aufeinander- bzw. Ineinanderfahren des Schnellkuppelrahmens 5 und des Gegenrahmens 6, also dem Kuppeln der Schnellkupplung 1, auch die Gelenkwelle 8 des Anbaugeräts 4 automatisch mit der Zapfwelle 23 des Schleppers 2 zu kuppeln, wird die Gelenkwelle 8 mit ihrem Anschlussstück 9 in einer definierten Kuppelstellung relativ zu dem Schnellkuppelrahmen 5 gehalten, so dass das Anschlussstück 9 automatisch auf die Zapfwelle 23 gefahren werden kann. Insbesondere definiert sich die genannte Kuppelposition des Anschlussstücks 9 durch die Geometrie am Schlepper 2, insbesondere der Position der Zapfwelle 23 relativ zum Gegenrahmen 6, wenn sich letzterer in der Kuppelposition befindet, in der er mit dem Schnellkuppelrahmen 5 verbunden werden kann.

Um das Anschlussstück 9 der Gelenkwelle 8 in der gewünschten Kuppelposition halten zu können, ist an dem Anbaugerät 4 ein Gelenkwellenhalter 7 vorgesehen, der in der gezeichneten Ausführungsform vorteilhafterweise aus einem mehrgelenkigen und teleskopierbaren Gelenkarm 19 besteht, der mit seinem einen Ende an dem Schnellkuppelrahmen 5 befestigt ist und mit seinem anderen Ende das Anschlussstück 9 der Gelenkwelle 8 hält. Der Gelenkwellenhalter muss dabei nicht aus einer einzelnen Strebe bestehen. In Weiterbildung der Erfindung kann der Gelenkwellenhalter auch mehrstrebig nach Art eines Zweischlags oder eines Dreibeins, oder in Form eines Rahmens oder Trägers, ausgebildet sein. Die gezeichnete einarmige Ausführung baut jedoch sehr kompakt. Wie Figur 2 zeigt, erstreckt sich der Gelenkarm 19 in der gezeichneten Ausführung etwa mittig von der Oberseite des Schnellkuppelrahmens 5 abfallend zum Schlepper 2 hin vom Schnellkuppelrahmen 5 weg.

Der Gelenkwellenhalter 7 umfasst dabei an seinem gelenkwellenseitigen Ende ein Haltestück 20, das das Anschlussstück 9 der Gelenkwelle 8 umgreift. Das Anschlussstück 9 ist dabei an dem Haltestück 20 durch ein Drehlager, vorzugsweise in Form eines Gleitlagers oder eines Wälzlagers, drehbar gelagert, und zwar um die bestimmungsgemäß vorgesehene Drehachse des Anschlussstücks 9. Im Übrigen ist das Anschlussstück 9 axial fest und auch kippfest an dem Haltestück 20 gelagert.

Das besagte Haltestück 20 des Gelenkwellenhalters 7 ist mehrachsig gelenkig mit dem restlichen Korpus des Gelenkwellenhalters 7 verbunden. Wie Figur 2 zeigt, sind zwischen dem Haltestück 20 und dem Gelenkarm 19 zwei Schwenkgelenke 10 und 11 vorgesehen, die zusammen die mehrachsige Verschwenkbarkeit des Haltestücks 20 sicherstellen.

Zum anderen ist der Gelenkarm 19 an seinem schnellkuppelrahmenseitigen Ende ebenfalls mehrachsig gelenkig an dem Schnellkuppelrahmen 5 befestigt, wobei ebenfalls zwei Schwenkgelenke 12 und 13 vorgesehen sind, vgl. Figur 2.

In die genannten Schwenkgelenke 10, 11, 12 und 13 des Gelenkwellenhalters 7 sind jeweils Hemmvorrichtungen 15 integriert, die bei Einwirken einer vorbestimmten Belastung die entsprechenden Schwenkbewegungen des Gelenkwellenhalters zulassen, jedoch bei Nichterreichen dieser vorbestimmten äußeren Last den Gelenkwellenhalter starr in der jeweiligen Position halten. Die Hemmvorrichtungen 14 sind dabei insbesondere derart ausgebildet, dass alleine das Eigengewicht des Gelenkwellenhalters 7 und der Gelenkwelle 8 nicht ausreichen, eine Verschwenkung der Schwenkgelenke 10, 11, 12 oder 13 zu bewirken, sondern dass erst eine signifikante zusätzliche Last eine Verstellung der Gelenkwellenposition erlaubt. Vorteilhafterweise können die Hemmvorrichtungen 14 dabei hinsichtlich der Grenzkraft derart bemessen sein, dass ein händisches Verstellen der Position ggf. unter beherztem Zupacken noch möglich ist.

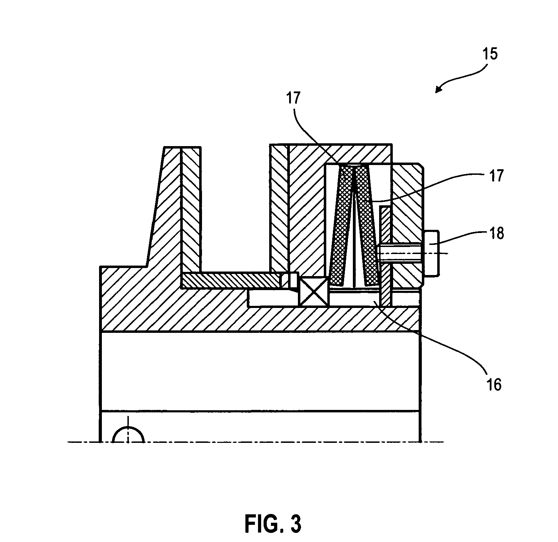

In der gezeichneten Ausführung werden die Hemmvorrichtungen 14 dabei von Halteelementen 15 in Form von Reibbremsen 16 bzw. Überlastkupplungen gebildet, wie sie Figur 3 zeigt. Diese Reibbremsen 16 umfassen dabei vorteilhafterweise zwei zueinander verdrehbare Anschlussstücke, zwischen denen aufeinander gespannte Reibelemente 17 vorgesehen sind, die die Verdrehung der beiden Anschlussstücke hemmen, solange ein ausgeübtes Drehmoment unter einem vorbestimmten Grenzmoment bleibt. Vorteilhafterweise sind dabei Einstellmittel 17 beispielsweise in Form einer Stellschraube vorgesehen, mit Hilfe derer die Hemmkraft variabel eingestellt werden kann.

Um eine kompakte Ausführung zu erreichen, sitzen dabei die Hemmelemente 15, wie sie Figur 3 zeigt, unmittelbar an den Schwenkgelenken 10, 11, 12 und 13 des Gelenkwellenhalters 7, wobei in der gezeichneten Ausführungsform die Schwenkachsen der genannten Schwenkgelenke die Hemmelemente 15 durchsetzen, d.h. die Hemmelemente 15 sitzen unmittelbar an den Schwenkachsen.

Hierdurch ergibt sich folgende vorteilhafte Funktion: Wird das Anbaugerät 4 erstmalig an den Schlepper 2 angebaut, wird beim Aufeinanderfahren des Schnellkuppelrahmens 5 und des Gegenrahmens 6 die Gelenkwelle 8 des Anbaugeräts 4 mit ihrem Anschlussstück 9 händisch passend ausgerichtet, so dass die Gelenkwelle 8 auf die Zapfwelle 23 des Schleppers 2 fahren kann. Treten im Betrieb Relativbewegungen zwischen der Gelenkwelle 8 und dem Schnellkuppelrahmen 5 auf, was beispielsweise die Folge von Stellbewegungen des Maschinenkorpus zur Bodenanpassung oder eines Aushebens des Anbaugeräts über die Dreipunktanlenkung des Schleppers 2 sein kann, verstellt sich der Gelenkwellenhalter 7 automatisch. Hierbei wird die Hemmkraft der Hemmvorrichtungen 14 überwunden, so dass sich die Gelenke 10, 11, 12 oder 13 entsprechend bewegen können. Vorteilhafterweise ist auch noch der Gelenkarm 19 selbst längenveränderbar, insbesondere teleskopierbar ausgebildet, um auch entsprechende Längenänderungen zuzulassen. Vorteilhafterweise ist auch diesem Freiheitsgrad des Gelenkwellenhalters 7 eine entsprechende Hemmvorrichtung 14 beispielsweise in Form einer Reibbremse 16 zugeordnet, die in Figur 2 als federvorgespannte Vorrichtung ausgebildet ist.

Wird das Anbaugerät dann wieder vom Schlepper 2 abgebaut und am Boden abgestellt, wird beim Lösen des Gegenrahmens 6 vom Schnellkuppelrahmen 5 und dem Abziehen des Anschlussstücks 9 der Gelenkwelle 8 von der schlepperseitigen Zapfwelle 23 die Stellung der Gelenkwelle 8 einschließlich ihres Anschlussstücks 9 von dem Gelenkwellenhalter 7 sozusagen eingefroren. Die Hemmvorrichtungen 14 fixieren die Gelenkstellen 10, 11, 12 und 13 des Gelenkwellenhalters 7, so dass das Anschlussstück 9 der Gelenkwelle 8 just in der Stellung verharrt, die passgenau mit der Zapfwelle 23 des Schleppers 2 fluchtet, wenn der Schlepper 2 mit dem daran befestigten Gegenrahmen 6 erneut auf den Schnellkuppelrahmen 5 gefahren wird, um das Anbaugerät 4 erneut anzukuppeln.

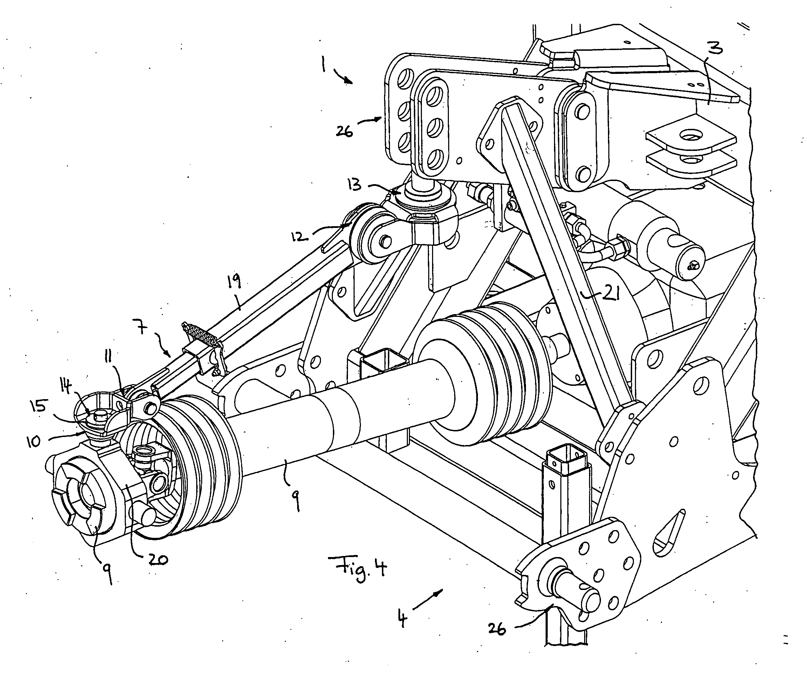

Wie sich aus Figur 4 ergibt, kann der Gelenkwellenhalter 7 auch ohne Verwendung eines Schnellkuppelrahmens 5 in vorteilhafter Weise das Ankuppeln des Anbaugeräts 4 beträchtlich erleichtern. Bei der Ausführung nach Figur 4 wird der Maschinenrahmen 3 des Anbaugeräts 4 sozusagen direkt durch eine Mehrpunktanlenkung mechanisch am Schlepper 2 angekuppelt. Das Anbaugerät 4 kann hierzu mehrere Anlenkpunkte 26 aufweisen, die am Maschinenrahmen 3 oder einem damit verbundenen Anbaubock vorgesehen sein können, vgl. Figur 4. An den besagten Anlenkpunkten 26 können die Lenker der Anlenkung, insbesondere einer an sich bekannten Dreipunktanlenkung, angelenkt werden, durch die das Anbaugerät 4 mit dem Schlepper 2 mechanisch verbunden wird.

Wie Figur 4 zeigt, ist der Gelenkwellenhalter 7 mit seinem einen Ende am Maschinenrahmen 3 bzw. einem damit verbundenen maschinenrahmenfesten Teil angelenkt. Im Übrigen entspricht die Ausführung nach Figur 4 insbesondere hinsichtlich der Ausbildung des Gelenkwellenhalters der zuvor beschriebenen Ausführung nach Figur 2 und 3.

## Patentansprüche

1. Landwirtschaftliches Anbaugerät, wie Mähmaschine, Heuwerbungsmaschine, Bodenbearbeitungsgerät und dergleichen, mit einer Schnellkupplung (1) zum mechanischen Ankuppeln des Anbaugeräts an einen Schlepper (2), sowie mindestens einem Gelenkwellenhalter (7), der eine Gelenkwelle (8) des Anbaugeräts (4) mit deren Anschlussstück (9) relativ zum Maschinenrahmen (3) des Anbaugeräts in einer vorbestimmten Kuppelposition hält, in der beim Kuppeln des Anbaugeräts mit dem Schlepper (2) das Gelenkwellenanschlussstück (9) mit einem schlepperseitigen Zapfwellenstück in Eingriff bringbar ist, **dadurch gekennzeichnet, dass** der mindestens eine Gelenkwellenhalter (7) mindestens ein Schwenkgelenk (10, 11, 12, 13) aufweist, dem eine Hemmvorrichtung (14) zugeordnet ist, die ungewollte Auslenkungen des Gelenkwellenhalters (7) aus der genannten Kuppelposition bis zu einer vorbestimmten äußeren Grenzlast auf die Gelenkwelle (8) größer deren Eigengewicht unterbindet und Auslenkungen des Gelenkwellenhalters (7) aus der genannten Kuppelposition bei Überschreiten der genannten Grenzlast freigibt.

2. Anbaugerät nach dem vorhergehenden Anspruch, wobei die Hemmvorrichtung (14) ein in das Schwenkgelenk (10, 11, 12, 13) integriertes Hemmelement (15) zur Bewegungshemmung des Gelenkwellenhalters aufweist.

3. Anbaugerät nach einem der vorhergehenden Ansprüche, wobei die Hemmvorrichtung (14) eine das Schwenkgelenk (10, 11, 12, 13) feststellende Reibbremse (16) mit einer vorbestimmten Durchrutschgrenze aufweist.

4. Anbaugerät nach einem der vorhergehenden Ansprüche, wobei die Hemmvorrichtung (14) in das Schwenkgelenk (10, 11, 12, 13) integrierte vorgespannte Reibelemente (17) aufweist.

5. Anbaugerät nach einem der vorhergehenden Ansprüche, wobei die Hemmvorrichtung (14) Einstellmittel (18) zur variablen Einstellung der vorgenannten Grenzlast aufweist.

6. Anbaugerät nach dem vorhergehenden Anspruch, wobei die Einstellmittel (18) einstellbare Vorspannmittel zum variablen Vorspannen von Reibelementen (17) aufweisen.

7. Anbaugerät nach einem der vorhergehenden Ansprüche, wobei der Gelenkwellenhalter (7) mehrere Schwenkgelenke (10, 11, 12, 13) aufweist, denen jeweils eine Hemmvorrichtung (14) zugeordnet ist, wobei vorzugsweise jedes Schwenkgelenk (10, 11, 12, 13) eine in das Schwenkgelenk integrierte Hemmvorrichtung (14) aufweist.

8. Anbaugerät nach Anspruch 1, wobei die Hemmvorrichtung (14) einen Druckmittelaktor zum Halten des Schwenkgelenks (10, 11, 12, 13) und/oder eines damit verbundenen Gelenkwellenhalterabschnitts in der vorbestimmten Kuppelposition aufweist.

9. Anbaugerät nach einem der vorhergehenden Ansprüche, wobei der Gelenkwellenhalter (7) einen vorzugsweise mehrgelenkig ausgebildeten Gelenkarm (19) aufweist, der einenends an dem Maschinenrahmen (3) des Anbaugeräts und/oder einem damit verbundenen Schnellkuppelrahmen (5) und anderenends durch geeignete Haltemittel an dem Anschlussstück (9) der Gelenkwelle (8) des Anbaugeräts (4) befestigt ist und zumindest ein Schwenkgelenk (10, 11, 12, 13) mit zugehöriger Hemmvorrichtung (14) aufweist.

10. Anbaugerät nach einem der vorhergehenden Ansprüche, wobei der Gelenkwellenhalter (7) ein Haltestück (20) aufweist, in dem das Anschlussstück (9) der Gelenkwelle (8) des Anbaugeräts (4) um dessen Drehachse drehbar und im Übrigen fest gelagert ist.

11. Anbaugerät nach einem der vorhergehenden Ansprüche, wobei die Schnellkupplung (1) einen mit dem Maschinenrahmen (3) des Anbaugeräts verbundenen Schnellkuppelrahmen (5) aufweist, der formschlüssig mit einem Gegenrahmen am Schlepper (2) verriegelbar ist.

12. Anbaugerät nach einem der Ansprüche 1 bis 10, wobei der Maschinenrahmen (3) des Anbaugeräts durch eine Anlenkung, vorzugsweise Dreipunktanlenkung, am Schlepper (2) mechanisch ankuppelbar ist.
